# EUROPEAN PATENT SPECIFICATION

(11) **EP 3 453 858 B1**
(45) Date of publication and mention of the grant of the patent: **17.11.2021**
(21) Application number: 17792641.7
(22) Date of filing: 08.03.2017
(51) Int. Cl.: F02D 19/08, F02B 31/00, F02B 31/06, F02D 21/08, F02D 43/00, F02D 45/00, F02M 25/00, F02M 26/17, F02M 37/00, F02P 5/15, F02D 41/00, F02P 5/04

(54) **POWERTRAIN SYSTEM**
ANTRIEBSSTRANGSYSTEM
SYSTÈME DE GROUPE MOTOPROPULSEUR

(30) Priority: 06.05.2016 JP 2016092943
(43) Date of publication of application: 13.03.2019
(73) Proprietor: Hitachi, Ltd., Tokyo 100-8280 (JP)
(72) Inventor: SUKEGAWA, Yoshihiro, Tokyo 100-8280 (JP); KANEEDA, Masato, Tokyo 100-8280 (JP); HATAMIYA, Shigeo, Tokyo 100-8280 (JP)
(74) Representative: MERH-IP Matias Erny Reichl Hoffmann Patentanwälte PartG mbB
(86) International application number: PCT/JP2017/009347
(87) International publication number: WO 2017/191708

(56) References cited:
- WO-A1-2011/040139
- JP-A- 2009 174 526
- JP-A- 2009 174 526
- JP-A- 2009 269 983
- JP-A- 2009 269 983
- JP-A- 2014 125 980
- JP-A- 2014 125 980
- JP-A- 2016 023 546
- JP-A- 2016 023 546
- US-A1- 2012 145 096

## Description

### Technical Field

The present invention relates to a power train system, and more particularly, to a power train system including a fuel reforming device for synthesizing methane from exhaust gas using a methane conversion catalyst.

### Background Art

In order to suppress global warming, various' technical efforts to reduce the amount of carbon dioxide emitted from an internal combustion engine have been made. For example, attempts have been made to reduce the amount of carbon dioxide by improving thermal efficiency of the internal combustion engine by a lean-burn control for burning an air-fuel mixture thinner than a theoretical air fuel ratio or a high compression ratio control for increasing a compression ratio.

In addition to the above attempts, a technology of providing a fuel reforming device in an internal combustion engine and synthesizing methane from carbon dioxide in exhaust gas by using a methane conversion catalyst to produce the methane as a fuel has been proposed. For example, JP 2009-269983 A (PTL 1) discloses a power train system which mixes carbon dioxide emitted from an internal combustion engine with hydrogen obtained by water decomposition or the like, applies predetermined pressure and heat in a reaction chamber to produce methane, and using the thus-obtained methane as a fuel for the internal combustion engine.
US 2012/0145096 A1 (PTL2) shows an engine system with a reformer, wherein an unreformed fuel is reformed by the reformer mounted in an exhaust pipe and wherein a reformed fuel containing hydrogen is supplied to an engine. The engine system with a reformer includes a controller which, when the hydrogen generated by the reformer is supplied to the engine, determines a target heat generation beginning timing in accordance with load applied to an engine, an engine speed, and an air excess ratio of an air-fuel mixture, and which controls an ignition timing of the engine so that difference between a current heat generation beginning timing and the target heat generation beginning timing of the engine is within a predetermined range.

### Citation List

### Patent Literature

PTL 1: JP 2009-269983 A
PTL 2: US 2012/0145096 A1

### Summary of Invention

### Technical Problem

As disclosed in PTL 1, in the method of synthesizing methane using a methane conversion catalyst, a component ratio of a mixed fuel of synthesized methane and hydrogen (hereinafter, referred to as an auxiliary fuel) is changed by an activated state based on a temperature of a methane conversion catalyst. Therefore, there is a possibility that, in a case where the synthesized auxiliary fuel is reused as the fuel of the internal combustion engine, an optimum operating condition of the internal combustion engine is changed by the components of the auxiliary fuel. Thus, if the components of the auxiliary fuel are changed, the thermal efficiency deteriorates, which has an adverse effect on fuel economy. However, the above-described PTL 1 does not disclose or consider these points at all. Therefore, a need exists for a more practical control technology.

An object of the present invention is to provide a novel power train system capable of improving fuel economy by adjusting an operating state of an internal combustion engine depending on components of an auxiliary fuel to be synthesized from hydrogen and carbon dioxide emitted from the internal combustion engine.

### Solution to Problem

The above problem is solved by the subject matter of the appended claims. In particular, a feature of the present invention is that an auxiliary fuel containing methane as a main component is synthesized from hydrogen and carbon dioxide which has been separated from exhaust gas using a methane conversion catalyst, and this auxiliary fuel is mixed with a main fuel and burned by an internal combustion engine (spark ignition type) and a combustion start timing or a combustion period of the internal combustion engine is adjusted depending on a temperature of the methane conversion catalyst.

### Advantageous Effects of Invention

According to the present invention, the operation of the internal combustion engine is appropriately controlled depending on the components of the auxiliary fuel to be synthesized to improve the thermal efficiency, thereby making it possible to improve the fuel economy.

### Brief Description of Drawings

[FIG. 1] FIG. 1 is a configuration diagram of a power train system including a reforming device according to a first embodiment of the present invention.
[FIG. 2] FIG. 2 is a configuration diagram showing an example of a configuration of a carbon dioxide separating means shown in FIG. 1.
[FIG. 3] FIG. 3 is a configuration diagram showing a configuration of a spark ignition type internal combustion engine according to the first embodiment of the present invention.
[FIG. 4] FIG. 4 is a configuration diagram showing a configuration of a methane conversion catalyst and a temperature measuring device.
[FIG. 5] FIG. 5 is a characteristic diagram showing a temperature characteristic of the methane conversion catalyst and conversion efficiency.
[FIG. 6] FIG. 6 is a characteristic diagram showing a ratio of a fuel component in a catalyst effluent gas in relation to a catalyst temperature.
[FIG. 7] FIG. 7 is a characteristic diagram showing a laminar flow burning velocity of methane and hydrogen.
[FIG. 8] FIG. 8 is a characteristic diagram showing a relationship between a catalyst temperature and a laminar flow burning velocity of an auxiliary fuel.
[FIG. 9] FIG. 9 is a characteristic diagram showing a relationship between a combustion period (heat generation period) and the catalyst temperature.
[FIG. 10] FIG. 10 is a characteristic diagram showing a mass fraction burned in a case in which an ignition timing is the same in an operating state in which the catalyst temperature is different.
[FIG. 11] FIG. 11 is a characteristic diagram showing a method of setting an ignition timing in relation to a catalyst temperature.
[FIG. 12] FIG. 12 is a characteristic diagram showing the mass fraction burned in the case in which an ignition timing control of the present invention is performed.
[FIG. 13] FIG. 13 is a configuration diagram showing a configuration of a spark ignition type internal combustion engine according to a second embodiment of the present invention.
[FIG. 14] FIG. 14 is a plan view of a spark ignition type internal combustion engine shown in FIG. 13.
[FIG. 15] FIG. 15 is an explanatory diagram showing an air flow when a tumble control valve shown in FIG. 13 is fully closed.
[FIG. 16] FIG. 16 is an explanatory diagram showing the air flow when the tumble control valve shown in FIG. 13 is fully opened.
[FIG. 17] FIG. 17 is a characteristic diagram showing a change in a turbulence intensity of an air-fuel mixture at a top dead center of a compression stroke in relation to an opening of a tumble generation valve.
[FIG. 18] FIG. 18 is a characteristic diagram showing a change in a turbulent burning velocity in relation to the opening of the tumble generation valve.
[FIG. 19] FIG. 19 is an explanatory diagram showing a method of setting a tumble generation valve in relation to a catalyst temperature.
[FIG. 20] FIG. 20 is a characteristic diagram showing mass fraction burned in a case in which an ignition timing is constant and the tumble generation valve is fully opened in an operating state in which the catalyst temperature is different.
[FIG. 21] FIG. 21 is a characteristic diagram showing the mass fraction burned in the case in which an opening control of the tumble generation valve is performed.
[FIG. 22A] FIG. 22A is an explanatory diagram showing a method of setting an ignition timing in a case in which both the ignition timing and the opening of the tumble generation valve are changed depending on the catalyst temperature.
[FIG. 22B] FIG. 22B is an explanatory diagram showing a method of setting an opening of a tumble generation valve in the case in which both the ignition timing and the opening of the tumble generation valve are changed depending on the catalyst temperature.
[FIG. 23] FIG. 23 is a characteristic diagram showing the mass fraction burned in the case in which the ignition timing and the opening of the tumble generation valve are controlled according to the present invention.
[FIG. 24] FIG. 24 is a configuration diagram showing a configuration of a spark ignition type internal combustion engine according to a third embodiment of the present invention.
[FIG. 25] FIG. 25 is an explanatory diagram showing a method of setting an EGR valve in relation to a catalyst temperature.
[FIG. 26] FIG. 26 is a characteristic diagram showing a relationship between an opening of the EGR value and a laminar flow burning velocity.

### Description of Embodiments

Hereinafter, embodiments of the present invention will be described in detail with reference to the drawings . However, the present invention is not limited to the embodiments described below, and various modifications are possible without departing from the scope of the appended claims.

### First Embodiment

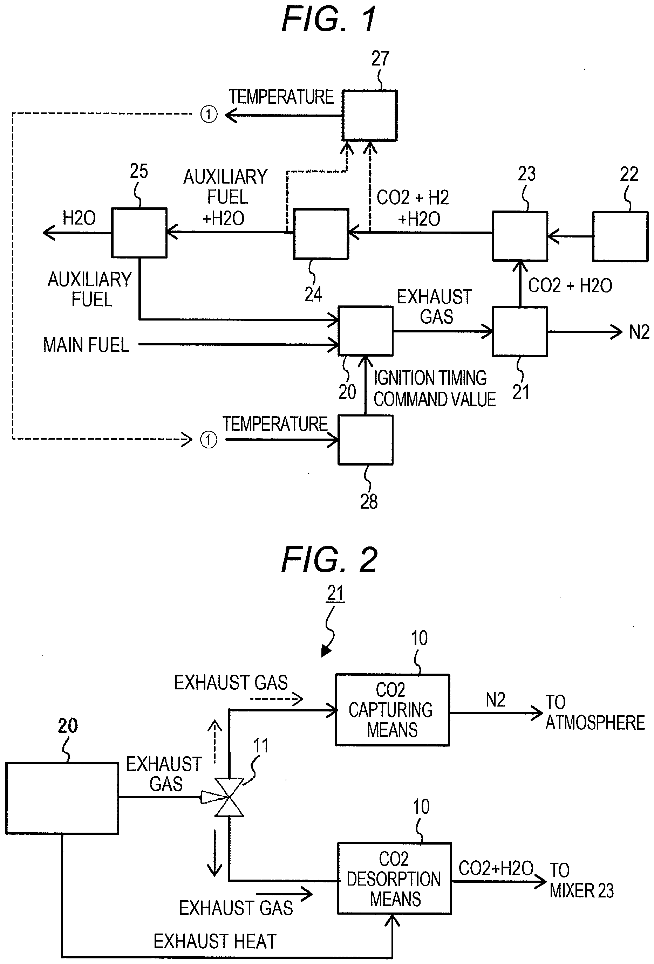

First, a power train system according to a first embodiment of the present invention will be described in detail with reference to FIGS. 1 to 4.

FIG. 1 shows an example of a configuration of a power train system. In FIG. 1, reference numeral 20 denotes a spark ignition type internal combustion engine (hereinafter, referred to as an internal combustion engine) which injects a fuel into an intake pipe, reference numeral 21 denotes a CO2 separating means which separates carbon dioxide (hereinafter, referred to as CO2) from exhaust gas, reference numeral 22 denotes a H2 supplying means which supplies hydrogen (hereinafter, referred to as H2), reference numeral 23 denotes a mixer which mixes CO2 with H2, reference numeral 24 denotes a methane conversion catalyst, and reference numeral 25 denotes a condenser, reference numeral 27 denotes a temperature measuring device, and reference numeral 28 denotes a controller.

The exhaust gas from the internal combustion engine 20 is separated into a mixed gas of CO2 with moisture (hereinafter, referred to as H2O) and nitrogen (hereinafter, referred to as N₂) by the CO2 separating means 21. The mixed gas of the separated CO2 with H2O and the H2 supplied from the H2 supplying means (for example, a hydrogen cylinder) 22 are uniformly mixed by the mixer 23 and are supplied to the methane conversion catalyst 24. An auxiliary fuel using methane (hereinafter, written by CH4) as a main component is synthesized by the methane conversion catalyst 24, and a mixed gas of the auxiliary fuel (mainly CH4) with the H2O is supplied to the condenser 25.

The auxiliary fuel and the H2O are separated by the condenser 25, and the auxiliary fuel is used as a fuel for the internal combustion engine 20. An inlet temperature of the methane conversion catalyst 24 is measured by the temperature measuring device 27, and temperature data is transmitted to the controller 28. The controller 28 determines various control parameter values such as an ignition timing of the internal combustion engine 20 to control an operating state of the internal combustion engine 20.

Next, an example of the configuration of the CO2 separating means 21 will be described with reference to FIG. 2. The CO2 separating means 21 can be realized by adsorbing CO2 and H2O in the exhaust gas into a CO2 capturing means 10 such as activated carbon, zeolite, and solid oxide. The operation process is performed by sequentially repeating a capturing process of CO2 and a desorption process of CO2.

It is possible to alternately repeat the CO2 capturing process and the CO2 desorption process by installing two or more CO2 capturing means 10. In the case in which one CO2 capturing means 10 is installed in an exhaust gas flow path, if a CO2 capturing reaction by the CO2 capturing means 10 continues, the capturing capacity of CO2 and H2O of the CO2 capturing means 10 will be exceeded. In such a case, as shown in FIG. 2, the flow of the exhaust gas is switched by a three-way valve 11 to introduce the exhaust gas into the other CO2 capturing means 10, CO2 and H2O in the exhaust gas can be continuously supplied.

On the other hand, with regard to the CO2 capturing means 10 which sufficiently captures CO2 and H2O, the inflow of the exhaust gas into the CO2 capturing means 10 is stopped and the temperature of the CO2 capturing means 10 is increased to desorb CO2 and H2O from the CO2 capturing means 10, thereby making it possible to recover CO2 and H2O.

By using heat discharged from the internal combustion engine to increase the temperature of the CO2 capturing means 10, it is possible to efficiently desorb CO2 and H2O in terms of energy. For example, it is possible to raise the temperature of the CO2 capturing means 10 by taking out a part of the exhaust gas of the internal combustion engine and applying the heat of the taken-out exhaust gas to the CO2 capturing means 10 via a heat medium. Alternatively, it is also possible to repeat the CO2 capturing process and the CO2 desorption process by rotating the CO2 capturing means 10.

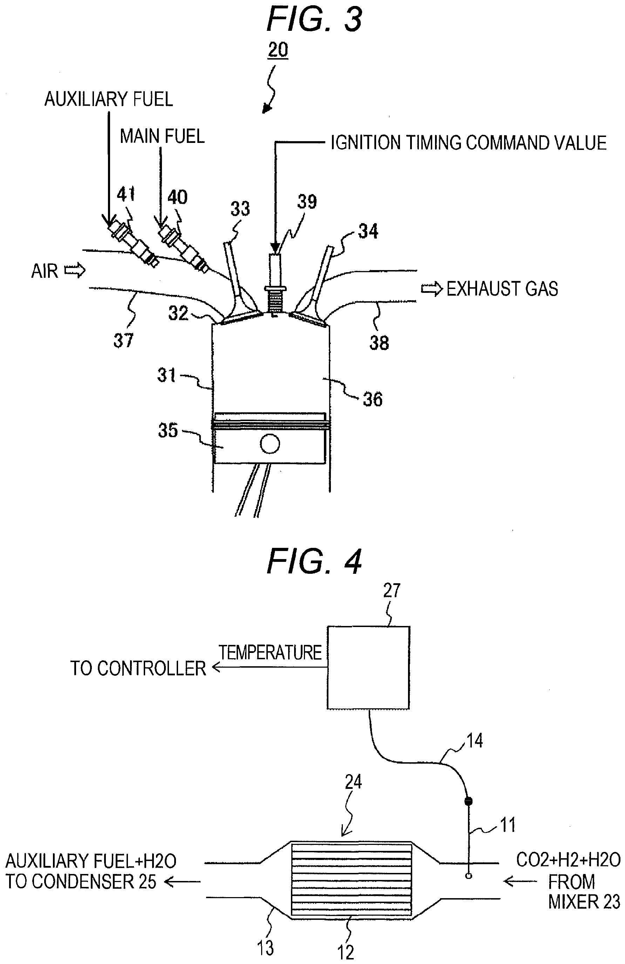

Next, the configuration of the internal combustion engine 20 will be described with reference to FIG. 3. FIG. 3 shows a combustion chamber and an intake/exhaust passage of a four-cycle type internal combustion engine. A piston 35 is slidably disposed in a cylinder 31, and the cylinder 31 is provided with a combustion chamber 36 of the internal combustion engine by an intake valve 33, an exhaust valve 34, and a cylinder head 32. Reference numeral 37 denotes an intake passage which supplies air and fuel, and reference numeral 38 denotes an exhaust passage which exhausts exhaust gas.

In addition, reference numeral 40 denotes a main fuel injector which supplies a main fuel into the intake passage 37, reference numeral 41 denotes an auxiliary fuel injector which supplies an auxiliary fuel to the intake passage 37, and reference numeral 39 denotes an ignition plug. The ignition timing by the ignition plug 39 is set by an ignition timing signal from a controller 28 (not shown) . As the main fuel, for example, a hydrocarbon fuel having a low cetane number such as gasoline, ethanol, methane, and propane is used. As the auxiliary fuel, a synthetic fuel of CH4 and H2 obtained from the condenser 25 shown in FIG. 1 is used. Here, the mixing ratio of CH4 and H2 of the auxiliary fuel depends on the temperature of the methane conversion catalyst 24.

In the internal combustion engine 20, an air-fuel mixture formed by the air supplied from the intake passage 37, the main fuel supplied from the main fuel injector 40, and the auxiliary fuel supplied from the auxiliary fuel injector 41 is introduced into the combustion chamber 36. The air-fuel mixture in the combustion chamber compressed by the piston 35 is ignited by the ignition plug 39 at a predetermined ignition timing and burned, and therefore the piston 35 is pushed down by the explosive force of the air-fuel mixture to obtain power from the internal combustion engine 20.

Next, the configuration of the methane conversion catalyst 24 and the temperature measuring device 27 will be described with reference to FIG. 4. Here, the methane conversion catalyst 24 is a catalyst that promotes a methanation reaction of CO2 and H2 shown below.

CO2 + 4H2 => CH4 + 2H2O

In FIG. 4, a catalyst carrier 12 is installed inside a catalyst case 13. The catalyst carrier 12 is a porous body made of Al, Ce, La, Ti, Zr or the like, and has Pt, Pd, Rh, Ni or the like as a catalytic active component supported on a surface thereof.

By using an oxide having a high specific surface area as the porous carrier of the methane conversion catalyst 24, Pt, Pd, Rh, and Ni are highly dispersed and the methanation performance is enhanced. In particular, if the oxide containing Al is used as the porous carrier, the high methanation performance can be obtained stably. The specific surface area of the porous carrier used in the first embodiment is preferably in the range of 30 to 800 m² / g, and particularly preferably in the range of 50 to 400 m² / g.

In addition, two or more kinds selected from Pt, Pd, Rh and Ni may be contained as the catalytic active component. The total supported amount of the catalytic active components of Pt, Pd, Rh and Ni is preferably 0.0003 parts by mol to 1. 0 part by mol with respect to 2 parts by mol of the porous carrier in terms of element. If the total supported amount of Pt, Pd, Rh and Ni is less than 0.0003 parts by mol, the supporting effect becomes insufficient. On the other hand, if the total supported amount exceeds 1.0 part by mol, the specific surface area of the active component itself is decreased, and the catalyst cost is increased.

Here, "part by mol" means a content ratio of each component in terms of mol number. For example, the fact that the supported amount of "component B" is 1 part by mol with respect to 2 parts by mol of "component A" means that the "component B" is supported at a ratio of "1" to "2" of "component A" in terms of mol number irrespective of the absolute amount of "component A".

In FIG. 4, reference numeral 11 denotes a thermocouple whose temperature measuring portion is inserted into an exhaust passage upstream of the catalyst case 13. A signal of the thermocouple 11 is taken in the temperature measuring device 27 through a temperature compensation conductor 14. The temperature measuring device 27 obtains the catalyst temperature from the signal of the thermocouple and transmits the temperature information to the controller 28.

Although the example in which the gas temperature at the catalyst inlet is used as the catalyst temperature is shown in the first embodiment, the temperature of the catalyst carrier is measured by inserting the thermocouple into the inside of the catalyst carrier 12, and the measured temperature of the catalyst carrier may be used as the catalyst temperature. Alternatively, the thermocouple may be inserted into the gas passage of the catalyst outlet to measure the gas temperature at the catalyst outlet, and the measured gas temperature may be used as the catalyst temperature.

In the first embodiment, in the power train system shown in FIGS. 1 to 4, the ignition timing by the ignition plug 39 of the internal combustion engine 20 is adjusted depending on the temperature of the methane conversion catalyst 24 measured by the temperature measuring device 27, thereby controlling the combustion start timing. If the ignition timing is shifted in an advance direction or a retard direction, a combustion start timing at which the combustion of the air-fuel mixture is started due to the ignition of the ignition plug 39.

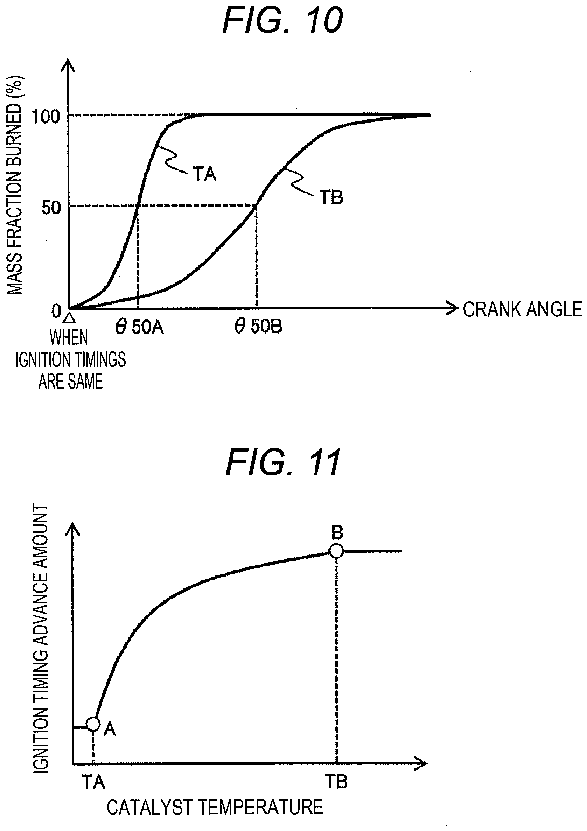

In other words, as shown in FIG. 11, as the catalyst temperature is decreased in a predetermined temperature range (the range of TA to TB in FIG. 11), an advance amount of the ignition timing is decreased (the ignition timing is delayed) . In this case, it is assumed that the ignition timing is before the top dead center. Therefore, as the catalyst temperature is decreased, the ignition timing approaches the top dead center. As is known well, the ignition timing is obtained by the number of revolutions, load, temperature, and the like of the internal combustion engine, but as a correction factor of the ignition timing thus obtained, the temperature of the methane conversion catalyst 24 described above may be reflected.

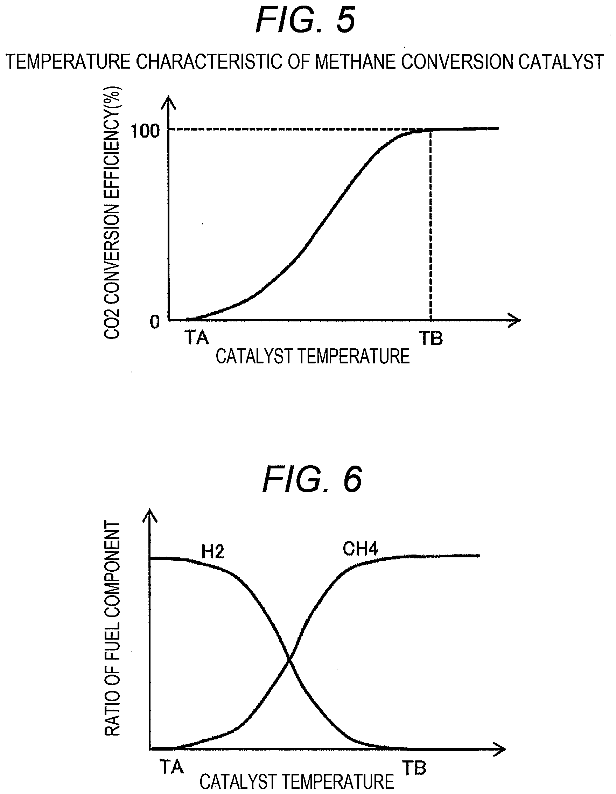

Operations, actions and effects of the first embodiment will be described with reference to FIGS. 5 to 12. First, the temperature characteristics of the methane conversion catalyst 24 will be described with reference to FIG. 5.

FIG. 5 is a characteristic diagram showing the conversion efficiency of CO2 into methane in relation to the catalyst temperature. In general, the conversion efficiency of the methane conversion catalyst 24 strongly depends on the catalyst temperature. When the catalyst temperature is lower than an activation temperature TA, the function as the catalyst hardly works and the conversion rate is almost "0%". On the other hand, when the catalyst temperature exceeds the activation temperature TA, the conversion of CO2 into methane is started, and the higher the catalyst temperature, the higher the conversion efficiency. When the conversion efficiency reaches "100% (or the upper limit conversion rate of the methane conversion catalyst)", the conversion rate becomes substantially constant against the increase in the catalyst temperature. The catalyst temperature when the conversion efficiency reaches "100% (or the upper limit conversion rate of the methane conversion catalyst)" is TB. The catalyst temperature TA and the catalyst temperature TB are variously changed depending on the supported components of the catalyst, or the like. For example, the TA is about 100 °C and the TB is about 200 °C.

As described above, the conversion efficiency is changed between the TA and the TB depending on the catalyst temperature, so the fuel components of the gas flowing out from the catalyst are changed depending on the catalyst temperature. FIG. 6 is a characteristic diagram showing the ratio of the fuel component in the catalyst effluent gas in relation to the catalyst temperature. When the catalyst temperature is lower than the TA, the conversion efficiency of the catalyst is substantially "0%", so H2 flowing into the catalyst flows out from the catalyst without reacting.

Therefore, when the catalyst temperature is lower than the TA, the catalyst effluent gas almost exclusively consists of H2 fuel component. On the other hand, when the catalyst temperature is higher than the TB, the conversion efficiency of the catalyst is substantially "100% (or the upper limit conversion rate of the methane conversion catalyst)", so the gas flowing out from the catalyst almost exclusively consists of CH4 fuel component. In the range of the catalyst temperature from the TA to the TB, the conversion efficiency is decreased as the catalyst temperature is decreased, so the ratio of H2 is increased and the ratio of CH4 is decreased.

That is, in the range of the catalyst temperature from the TA to the TB, the auxiliary fuel produced by the catalyst is a mixed fuel of CH4 and H2, and the component ratio thereof is set so that the ratio of H2 is increased as the catalyst temperature is decreased.

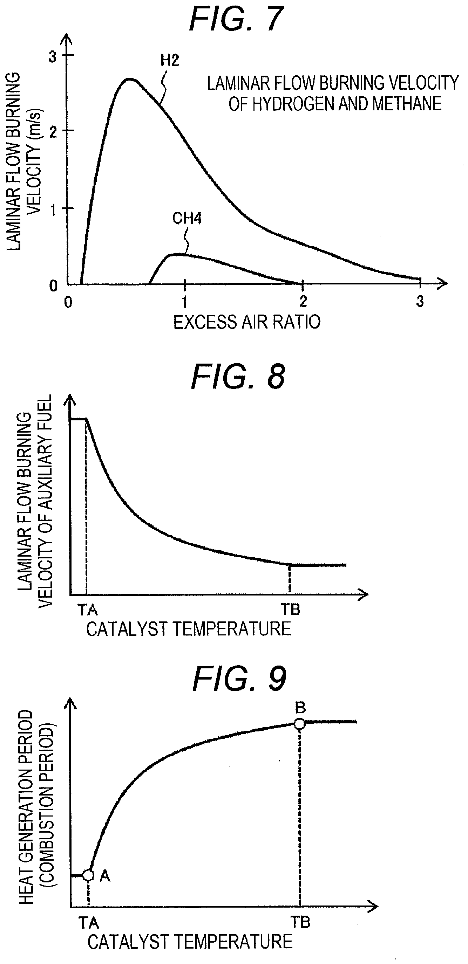

FIG. 7 is a characteristic diagram showing laminar flow burning velocities of CH4 and H2. Here, the laminar flow burning velocity represents a velocity at which an unburnt air-fuel mixture ahead of a flame surface is burned when the air-fuel mixture is stopped or flows in a laminar flow. H2 has a characteristic that the laminar flow burning velocity is much faster than that of CH4. Even in the auxiliary fuel in which H2 and CH4 are mixed, the difference in the laminar flow burning velocities of H2 and CH4 is reflected, and the higher the ratio of H2, the higher the laminar flow burning velocity of the auxiliary fuel.

As described above, since the laminar flow burning velocity is changed depending on a mixing ratio of H2 and CH4, when the ratio of H2 and CH4 of the auxiliary fuel is changed depending on the catalyst temperature, the laminar flow burning velocity of the auxiliary fuel is changed, which has a correlation as shown in FIG. 8 to the catalyst temperature. That is, in the range of the catalyst temperature from the TA to the TB, the laminar flow burning velocity of the auxiliary fuel is increased as the catalyst temperature is decreased.

In addition, the combustion period (heat generation period) in a premix combustion is substantially inversely proportional to the laminar flow combustion velocity. Therefore, the relationship between the combustion period (heat generation period) and the catalyst temperature is as shown in FIG. 9, and in the range of the catalyst temperature from the TA to the TB, the combustion period (heat generation period) is short as the catalyst temperature is decreased. FIG. 10 shows a comparison of the mass fraction burned (MFB) when two operating states in the case in which the catalyst temperature is the TA and the TB are assumed and the ignition timings thereof are the same. Here, the mass fraction burned represents the ratio of the burned fuel in the fuel flowing into the combustion chamber.

In the case in which the catalyst temperature is the TA, the combustion period (heat generation period) is shorter than that in the case in which the catalyst temperature is the TB, so θ50A which is the combustion timing (MFB 50) of 50% which is a combustion center when the catalyst temperature is the TA becomes an advance side as compared with θ50B which is the combustion timing (MFB 50) of 50% when the catalyst temperature is the TB. In general, it is known that in the internal combustion engine, if the MFB 50 (combustion center) is set to be 10 to 15 °CA after the compression top dead center, the thermal efficiency becomes the best. Therefore, the ignition timing is preset so that the air-fuel mixture is ignited to be burnt and the MFB 50 (combustion center) becomes 10 to 15 °CA after the compression top dead center.

Specifically, the ignition timing is preset so that θ50B, which is the MFB 50 (combustion center) in a state in which the conversion efficiency of the methane conversion catalyst 24 is sufficiently high, is 10 to 15 °CA after the compression top dead center. Therefore, if the temperature of the methane conversion catalyst 24 is decreased, the amount of H2 is increased to shorten the combustion period (heat generation period), so the MFB 50 (combustion center) is shifted in an advance direction more than an optimum value, and as a result, the thermal efficiency is decreased.

Therefore, in the first embodiment, as shown in FIG. 11, the internal combustion engine is controlled so that the advance amount of the ignition timing becomes smaller as the catalyst temperature becomes lower in the range of the catalyst temperature from the TA to the TB.

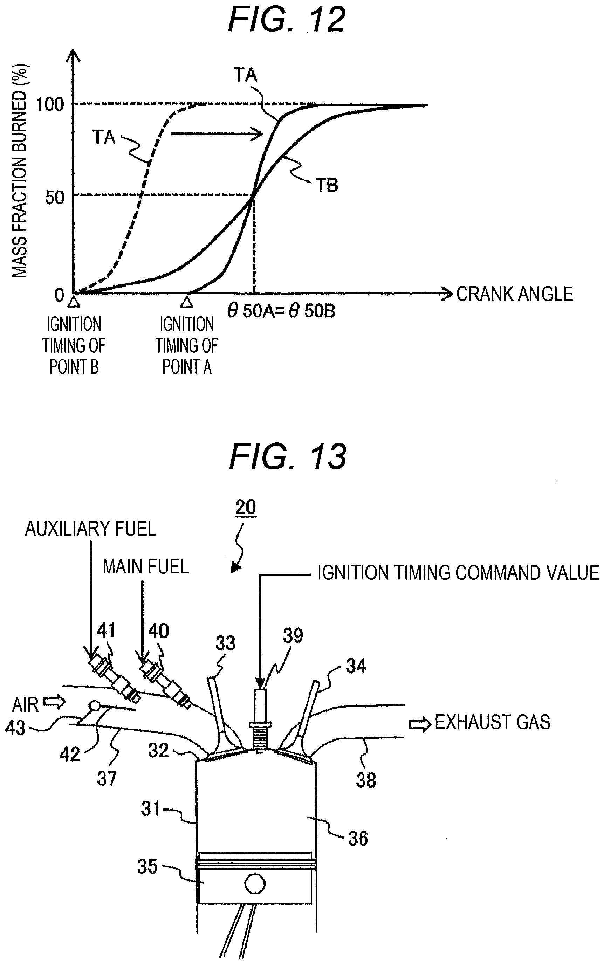

FIG. 12 shows the comparison of the mass fraction burned when the ignition timing control is performed according to the first embodiment. In the case of the TA in which the catalyst temperature is decreased and the combustion period (heat generation period) is short, the ignition timing is controlled to be shifted to the retard side with respect to the TB as indicated by the arrow, and the heat generation period is shifted to the retard side. As a result, even when the catalyst temperature is decreased, the MFB 50 (combustion center) can approach the optimum position, and the thermal efficiency can be increased and the fuel economy can be improved as compared with the case in which the ignition timing is not changed depending on the catalyst temperature.

### Second Embodiment

Next, a second embodiment of the present invention will be described with reference to FIGS. 13 to 23. In the first embodiment, the combustion start timing is controlled by adjusting the ignition timing depending on the temperature of the methane conversion catalyst 24, but the second embodiment is different from the first embodiment in that the combustion period (heat generation period) of the air-fuel mixture is controlled depending on the temperature of the methane conversion catalyst 24.

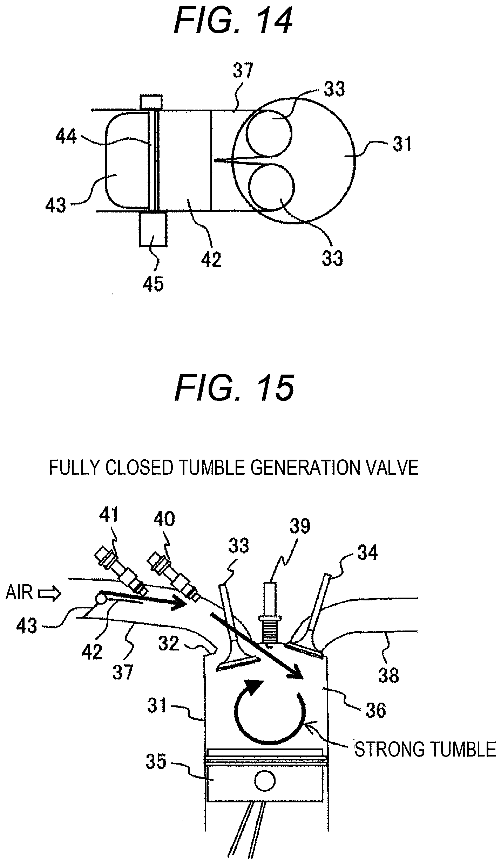

A configuration of a power train system according to the second embodiment is the same as that of the first embodiment, and therefore a detailed description thereof will be omitted. Here, FIGS. 13 and 14 show a configuration of an internal combustion engine 20 according to the second embodiment. FIG. 13 shows a longitudinal section of the internal combustion engine 20 according to the second embodiment, and FIG. 14 shows a plane of the internal combustion engine 20 shown in FIG. 13.

In the configuration of the internal combustion engine 20 according to the second embodiment, a tumble reinforcing means which reinforces a tumble (longitudinal vortex) in a combustion chamber is provided in a passage of an intake passage 37, and other configurations of the internal combustion engine 20 are the same as the first embodiment, and therefore a description thereof will be omitted.

The tumble reinforcing means which reinforces the tumble includes a partition wall 42 formed in a part of the passage of the intake passage 37, a rotating shaft 44 which is provided on the partition wall 42, a tumble generation valve 43 which is fixed to the rotating shaft 44, and disposed in a passage formed by the partition wall 42 and a wall surface of the intake passage 37, and an actuator 45 which drives the rotating shaft 44.

As shown in FIGS. 13 and 14, the partition wall 42 is a plate-like member which divides a passage cross section of the intake passage 37 into upper and lower passages. The tumble generation valve 43 is configured to be attached to the rotating shaft 44 and rotated about the rotating shaft 44 by the actuator 45. By rotating the tumble generation valve 43, the amount of air flowing into the lower passage of the intake passage 37 divided by the partition wall 42 can be adjusted, and this adjustment amount (rotation angle) is controlled by the controller 28. Here, the greater the amount of air passing through the tumble generation valve 43, the weaker the strength of the tumble.

In the second embodiment, in the power train system shown in FIGS. 1, 2, 4, 13, and 14, an opening of the tumble generation valve 43 of the internal combustion engine 20 is adjusted depending on a temperature the methane conversion catalyst 24 measured by a temperature measuring device 27. That is, the combustion period (heat generation period) is controlled by adjusting the strength of the tumble in the combustion chamber 36.

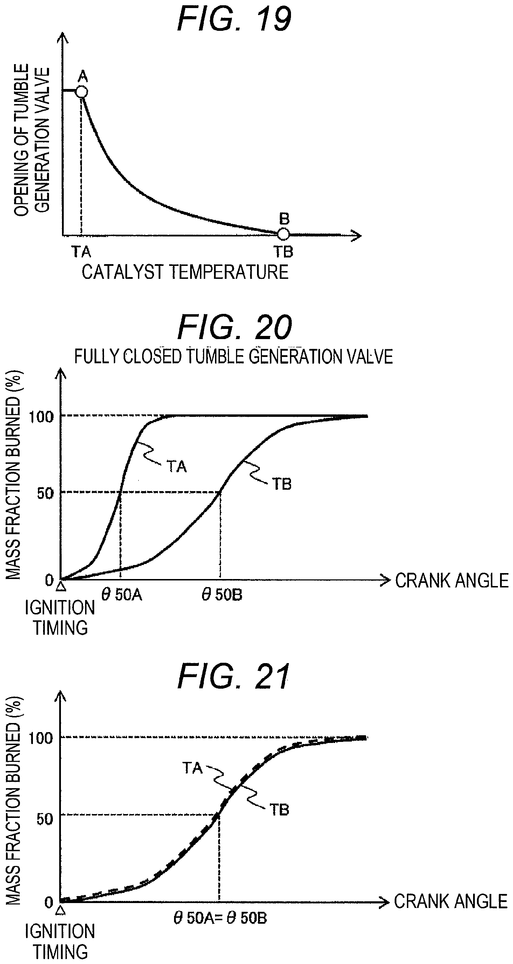

Since the combustion period (heat generation period) becomes shorter as the strength of the tumble is increased, the larger the amount of H2 with a fast burning velocity, the weaker the tumble and the longer the combustion period (heat generation period) . For this reason, as shown in FIG. 19, when a catalyst temperature is in a predetermined temperature range (the range of TA to TB in FIG. 19), as the catalyst temperature at which H2 is increased is decreased, the opening of the tumble generation valve 43 is increased in a direction in which a flow of air passing through the tumble generation valve 43 is increased.

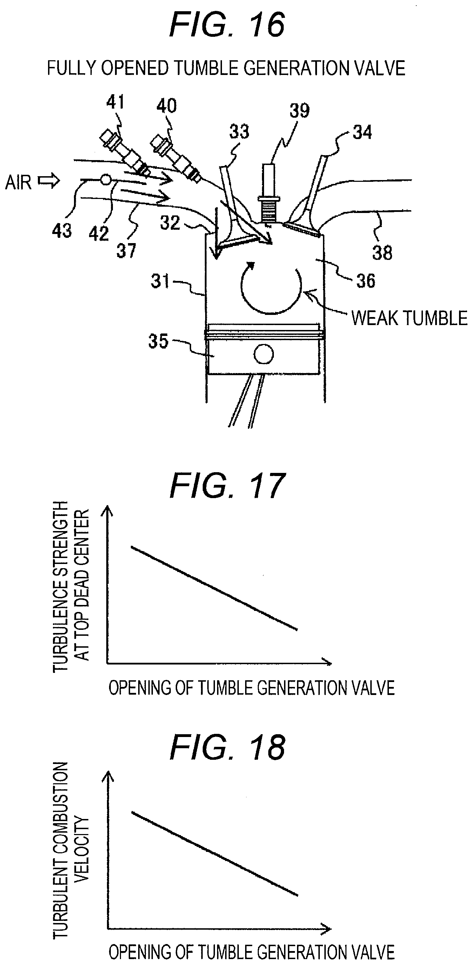

Operations, actions and effects of the second embodiment will be described with reference to FIGS. 15 to 21, but first, a difference in the air flow in the combustion chamber due to a difference in the opening of the tumble generation valve 43 will be described by using FIGS. 15 and 16. FIG. 15 shows the air flow when the tumble generation valve 43 is in a fully closed state (the state in which a flow rate of air is the minimum), and FIG. 16 shows the air flow when the tumble generation valve 43 is in a fully opened state (the state in which the flow rate of air is the maximum).

As shown in FIG. 15, when the tumble generation valve 43 is fully closed, air does not flow into the passage under the partition wall 42 of the intake passage 37, but mainly flows in the combustion chamber 36 through an upper side of the opening portion of the intake valve 33. Therefore, a strong tumble is generated in the combustion chamber 36.

On the other hand, as shown in FIG. 16, when the tumble generation valve 43 is in the fully opened state, air equally flows in the upper and lower passages of the partition wall 42 of the intake passage 37, and thus substantially equally flows in the combustion chamber 36 from upper and lower sides of the opening portion of the intake valve 33. For this reason, the tumble generated in the combustion chamber 36 is weaker (the air velocity is retarded) than the tumble generated when the tumble generation valve 43 is in the fully closed state.

The tumble generated in the combustion chamber 36 collapses in a later stage of a compression stroke to generate turbulence (turbulent flow) in the combustion chamber 36. FIG. 17 shows the change in the strength of the turbulence at a top dead center of the compression stroke in relation to the opening of the tumble generation valve 43. The strength of the turbulence generated by the collapse of the tumble is substantially proportional to the strength (air velocity) of the tumble generated in the combustion chamber 36. Therefore, the strength of the turbulence is decreased as the opening of the tumble generation valve 43 is increased.

Since a turbulent combustion velocity of premixed gas flame is substantially proportional to the strength of the turbulence, as shown in FIG. 18, the turbulent combustion velocity is retarded as the opening of the tumble generation valve 43 is increased. Further, it can be seen that the combustion period (heat generation period) in the premixed combustion is substantially proportional to the turbulent combustion velocity and therefore the combustion period (heat generation period) is retarded as the opening of the tumble generation valve is increased.

FIG. 20 shows a comparison of mass fraction burned when two operating states in the case in which the catalyst temperature is TA and TB are assumed, the ignition timings in the two operating states are constant, and the tumble generation valve is fully closed.

In the case in which the catalyst temperature is the TA, a ratio of H2 in an auxiliary fuel is higher than that in the case in which the catalyst temperature is the TB and the combustion period (heat generation period) is short, so θ50A which is MFB 50 (combustion center) when the catalyst temperature is the TA becomes an advance side as compared with θ50B which is MFB 50 (combustion center) when the catalyst temperature is the TB. Therefore, when the temperature of the methane conversion catalyst 24 is decreased, the MFB 50 (combustion center) is further shifted in an advance direction more than an optimum value, so the thermal efficiency is decreased.

In the second embodiment, as shown in FIG. 19, in the range of the catalyst temperature from the TA to TB, the opening of the tumble generation valve 43 is controlled to be increased as the catalyst temperature is decreased.

FIG. 21 shows the comparison of the mass fraction burned when the opening of the tumble generation valve is controlled according to the second embodiment. In the case of the TA in which the catalyst temperature is decreased and the combustion period (heat generation period) is short, the opening of the tumble generation valve 43 is increased to decrease the turbulent combustion velocity, so the combustion period (heat generation period) is shifted to a retard side. As a result, even in the case in which the catalyst temperature is decreased, the MFB 50 (combustion center) can approach the optimum position, and the thermal efficiency can be further increased as compared with the case in which the opening of the tumble generation valve 43 is not changed depending on the catalyst temperature.

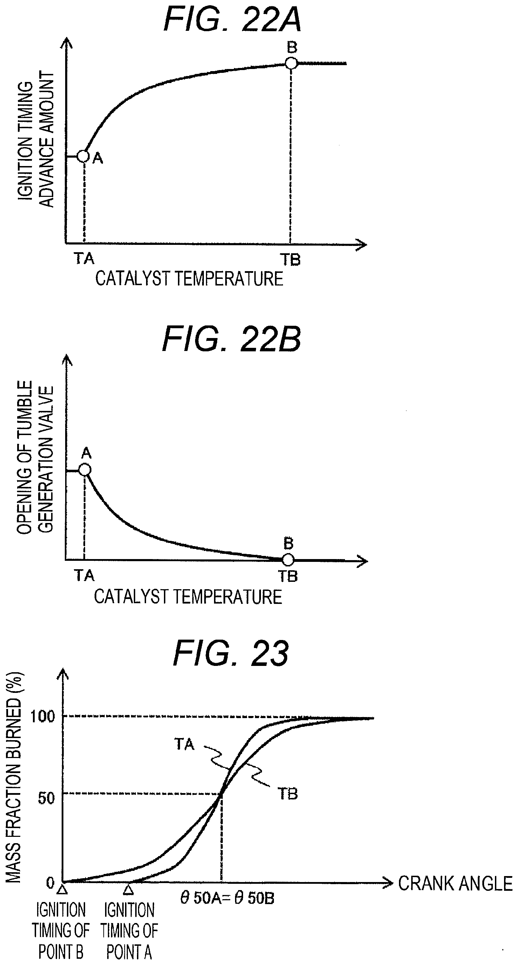

In addition, it is also possible to combine the first embodiment with the second embodiment to simultaneously adjust both the opening of the tumble generation valve 43 and the ignition timing of the ignition plug 39 depending on the catalyst temperature. In the range of the catalyst temperature from the predetermined temperature range of TA to TB, as shown in FIG. 22A, as the catalyst temperature is decreased, the advance amount of the ignition timing is decreased, and as shown in FIG. 22B, the opening of the tumble generation valve 43 may be adjusted to be increased.

FIG. 23 shows the change in the mass fraction burned in the case in which both the ignition timing of the ignition plug 39 and the opening of the tumble generation valve 43 are adjusted depending on the catalyst temperature. In the case in which the catalyst temperature is low like the TA, by retarding the ignition timing of the ignition plug 39, the combustion start timing at which heat is generated by the combustion of the air-fuel mixture is retarded, and the opening of the tumble generation valve 43 is increased, so the combustion period (heat generation period) is continued for a long time.

By both the effects, θ50A which is the MFB 50 (combustion center) when the catalyst temperature is low like TA is retarded and approaches θ50B which is an optimum point, thereby making it possible to increase the thermal efficiency when the catalyst temperature is decreased. In this way, the amount of change in the ignition timing and the opening of the tumble generation valve can be further decreased in the case in which both the ignition timing of the ignition plug 39 and the opening of the tumble generation valve 43 are adjusted depending on the catalyst temperature than in the case in which the ignition timing of the ignition plug 39 and the opening of the tumble generation valve 43 are controlled independently.

When the amount of change in the control parameter value of the internal combustion engine is increased, there is a problem that the combustion becomes unstable in transition or transient followability deteriorates. However, the above-described method can reduce the changes in each control amount, and therefore has an advantage over these problems.

### Third Embodiment

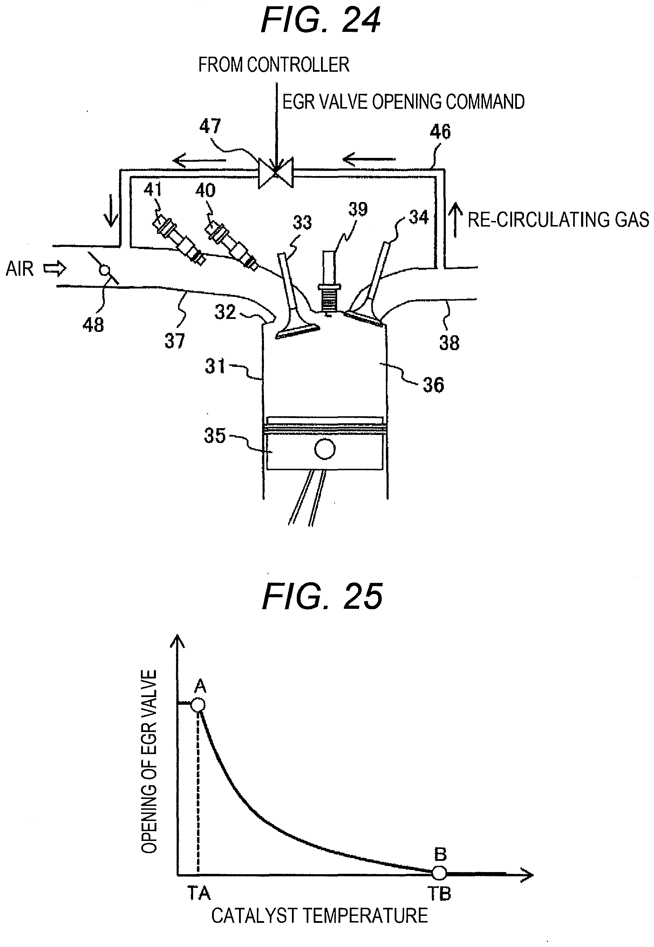

Next, a third embodiment of the present invention will be described with reference to FIGS. 24 to 26. In the first embodiment and the second embodiment, the component ratio of the auxiliary fuel is changed depending on the temperature of the methane conversion catalyst 24, and the MFB 50 (combustion center) deviating from the optimum point of the thermal efficiency is corrected by adjusting the combustion start timing according to the ignition timing or adjusting the combusting period (heat generation period) according to the strength of the tumble. On the other hand, the third embodiment proposes adjusting the combustion start timing or the combustion period (heat generation period) by a control parameter different from the ignition timing and the strength of the tumble.

In an internal combustion engine shown in FIG. 24, an EGR passage 46 connecting an intake passage 37 and an exhaust pipe 38 is provided, and the amount of re-circulating gas flowing through the EGR passage 46 is adjusted by an EGR valve 47. In this manner, in a power train system that can control the amount of re-circulating gas amount, an opening of the EGR valve 47 may be adjusted depending on a temperature of a methane conversion catalyst 24.

Specifically, as shown in FIG. 25, in the range of the catalyst temperature from TA to TB, as the catalyst temperature is decreased, a controller 28 may control the opening of the EGR valve 47 to be increased so as to adjust the re-circulating gas.

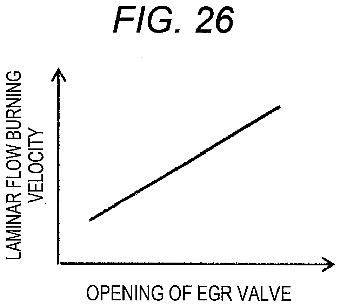

When the opening of the EGR valve 47 is increased, a large amount of re-circulating gas is introduced into a combustion chamber 36, so an air-fuel mixture in the combustion chamber 36 is diluted and a laminar flow burning velocity is decreased as shown in FIG. 26. When the catalyst temperature is decreased and the combustion period (heat generation period) is short, a large amount of re-circulating gas is introduced to reduce the combustion velocity and shift the heat generation period to a retard side. As a result, even in the case in which the catalyst temperature is decreased, MFB 50 (combustion center) can approach an optimum position, and the thermal efficiency can be further increased as compared with the case in which the opening of the EGR valve 47 is not changed depending on the catalyst temperature.

In addition, it is also possible to combine the first embodiment with the third embodiment to simultaneously adjust both the opening of the EGR valve 47 and the ignition timing of the ignition plug 39 depending on the catalyst temperature. When the catalyst temperature ranges from TA to TB which is a predetermined temperature range, as the catalyst temperature is decreased, an advance amount of the ignition timing may be decreased and the opening of the EGR valve may be adjusted to be increased.

In the case in which the catalyst temperature is low like the TA, by retarding the ignition timing of the ignition plug 39, a combustion start timing at which heat is generated by the combustion of the air-fuel mixture is retarded, and the opening of the EGR valve 47 is increased, so the combustion period (heat generation period) is continued for a long time.

By both the effects, θ50A which is the MFB 50 (combustion center) when the catalyst temperature is low like TA is retarded and approaches θ50B which is an optimum point, thereby making it possible to increase the thermal efficiency when the catalyst temperature is decreased. In this way, the amount of change in the ignition timing and the opening of the EGR valve 47 can be further decreased in the case in which both the ignition timing of the ignition plug 39 and the opening of the EGR valve 47 are adjusted depending on the catalyst temperature than in the case in which the ignition timing of the ignition plug 39 and the opening of the EGR valve 47 are controlled independently.

As described above, the present invention is configured to synthesize the auxiliary fuel containing methane as the main component from hydrogen and carbon dioxide which has been separated from exhaust gas using a methane conversion catalyst, mix the auxiliary fuel with the main fuel, and combust the mixed fuel in the internal combustion engine, and adjust the combustion start timing or the combustion period of the internal combustion engine depending on the temperature of the methane conversion catalyst. As a result, the operation of the internal combustion engine is appropriately controlled depending on the components of the auxiliary fuel to be synthesized to improve the thermal efficiency, thereby improving the fuel economy.

The present invention is not limited to the above-mentioned embodiments, instead it is defined by the appended claims.

### Reference Signs List

- 11: thermocouple
- 12: catalyst carrier
- 13: catalyst case
- 14: temperature compensation conductor
- 20: spark ignition type internal combustion engine
- 21: CO2 separating means
- 22: H2 supplying means
- 23: mixer
- 24: methane conversion catalyst
- 25: condenser
- 27: temperature measuring device
- 28: controller
- 31: cylinder
- 35: piston
- 33: intake valve
- 34: exhaust valve
- 32: cylinder head
- 36: combustion chamber
- 37: intake passage
- 38: exhaust passage
- 39: ignition plug
- 40: main fuel injector
- 41: auxiliary fuel injector
- 42: partition wall
- 43: tumble generation valve
- 44: rotating shaft
- 45: actuator
- 46: EGR passage
- 47: EGR valve
- 48: throttle valve

## Claims

1. A power train system comprising:
an internal combustion engine (20); a fuel reforming means which introduces carbon dioxide and hydrogen into a methane conversion catalyst (24) to synthesize an auxiliary fuel, the carbon dioxide having been separated from exhaust gas emitted from the internal combustion engine (20);
a fuel supplying means which supplies the auxiliary fuel, together with a main fuel, to the internal combustion engine;
an ignition means which ignites an air-fuel mixture supplied to the internal combustion engine (20); and
a control means (28) which controls the fuel supplying means and the ignition means,
wherein the control means (28) includes an ignition timing correction means which adjusts a combustion start timing of the air-fuel mixture by the ignition means depending on a temperature of the methane conversion catalyst (24).

2. The power train system according to claim 1,
wherein the ignition timing correction means has a function of retarding the combustion start timing by shifting an ignition timing in a retard direction as the temperature of the methane conversion catalyst (24) is decreased.

3. The power train system according to claim 1 or 2, the power train system further comprising:
an air flow control means which changes a strength of an air flow generated in a combustion chamber (36) of the internal combustion engine (20); and
the control means (28) is configured to control the fuel supplying means, the ignition means, and the air flow control means,
wherein the control means (28) includes an air flow correction means which adjusts a combustion period of the air-fuel mixture based on the air flow depending on a temperature of the methane conversion catalyst (24).

4. The power train system according to claim 3,
wherein the air flow correction means has a function of shortening the combustion period by shifting the combustion period in a direction in which the air flow generated in the combustion chamber (36) is stronger as the temperature of the methane conversion catalyst (24) is decreased.

5. The power train system according to claim 1 or 2, the power system further comprising:
an EGR control means which re-circulates the exhaust gas from the internal combustion engine (20) to an intake passage (37) of the internal combustion engine (20); and
the control means (28) configured to control the fuel supplying means, the ignition means, and the EGR control means,
wherein the control means (28) includes an EGR correction means which adjusts a combustion period of the air-fuel mixture based on a recirculation of the exhaust gas depending on a temperature of the methane conversion catalyst (24).

6. The power train system according to claim 5,
wherein the EGR correction means has a function of shortening the combustion period by shifting the combustion period in a direction in which a recirculation amount is increased as the temperature of the methane conversion catalyst (24) is decreased.

7. The power train system according to claim 3,
wherein the air flow correction means is configured to adjust a combustion period of the air-fuel mixture based on a recirculation of the exhaust gas depending on the temperature of the methane conversion catalyst (24).

8. The power train system according to claim 7,
wherein the ignition timing correction means has a function of retarding the combustion start timing by shifting an ignition timing in a retard direction as the temperature of the methane conversion catalyst (24) is decreased, and
the EGR correction means has a function of shortening the combustion period by shifting the combustion period in a direction in which a recirculation amount is increased as the temperature of the methane conversion catalyst (24) is decreased.

## Patentansprüche

1. Antriebsstrangsystem, das Folgendes umfasst:
eine Brennkraftmaschine (20);
ein Kraftstoffreformierungsmittel, das Kohlenstoffdioxid und Wasserstoff in einen Methanumwandlungskatalysator (24) einleitet, um einen Hilfskraftstoff zu synthetisieren, wobei das Kohlenstoffdioxid aus Abgas, das von der Brennkraftmaschine (20) abgegeben worden ist, abgeschieden wurde;
ein Kraftstoffzufuhrmittel, das den Hilfskraftstoff gemeinsam mit einem Hauptkraftstoff der Brennkraftmaschine zuführt;
ein Zündmittel, das ein Luft/Kraftstoff-Gemisch, das der Brennkraftmaschine (20) zugeführt wurde, zündet; und
ein Steuermittel (28), das das Kraftstoffzufuhrmittel und das Zündmittel steuert, wobei
das Steuermittel (28) ein Zündzeitpunktkorrekturmittel enthält, das einen Verbrennungsstartzeitpunkt des Luft/Kraftstoff-Gemischs durch das Zündmittel abhängig von einer Temperatur des Methanumwandlungskatalysators (24) anpasst.

2. Antriebsstrangsystem nach Anspruch 1, wobei
das Zündzeitpunktkorrekturmittel eine Funktion des Verzögerns des Verbrennungsstartzeitpunkts durch Verschieben eines Zündzeitpunkts in einer Verzögerungsrichtung, wenn die Temperatur des Methanumwandlungskatalysators (24) abnimmt, besitzt.

3. Antriebsstrangsystem nach Anspruch 1 oder 2, wobei das Antriebsstrangsystem ferner Folgendes umfasst:
ein Luftdurchflusssteuermittel, das eine Stärke eines Luftdurchflusses, der in einer Brennkammer (36) der Brennkraftmaschine (20) erzeugt wird, ändert; und
das Steuermittel (28), das konfiguriert ist, das Kraftstoffzufuhrmittel, das Zündmittel und das Luftdurchflusssteuermittel zu steuern, wobei
das Steuermittel (28) ein Luftdurchflusskorrekturmittel enthält, das einen Verbrennungszeitraum des Luft/Kraftstoff-Gemischs auf der Grundlage des Luftdurchflusses abhängig von einer Temperatur des Methanumwandlungskatalysators (24) anpasst.

4. Antriebsstrangsystem nach Anspruch 3, wobei
das Luftdurchflusskorrekturmittel eine Funktion des Verkürzens des Verbrennungszeitraums durch Verschieben des Verbrennungszeitraums in einer Richtung, in der der Luftdurchfluss, der in der Brennkammer (36) erzeugt wird, stärker ist, wenn die Temperatur des Methanumwandlungskatalysators (24) abnimmt, besitzt.

5. Antriebsstrangsystem nach Anspruch 1 oder 2, wobei das Antriebssystem ferner Folgendes umfasst:
ein AGR-Steuermittel, das das Abgas der Brennkraftmaschine (20) zu einem Einlasskanal (37) der Brennkraftmaschine (20) zurückführt; und
das Steuermittel (28), das konfiguriert ist, das Kraftstoffzufuhrmittel, das Zündmittel und das AGR-Steuermittel zu steuern, wobei
das Steuermittel (28) ein AGR-Korrekturmittel enthält, das einen Verbrennungszeitraum des Luft/Kraftstoff-Gemischs auf der Grundlage einer Rückführung des Abgases abhängig von einer Temperatur des Methanumwandlungskatalysators (24) anpasst.

6. Antriebsstrangsystem nach Anspruch 5, wobei
das AGR-Korrekturmittel eine Funktion des Verkürzens des Verbrennungszeitraums durch Verschieben des Verbrennungszeitraums in einer Richtung, in der eine Rückführungsmenge zunimmt, wenn die Temperatur des Methanumwandlungskatalysators (24) abnimmt, besitzt.

7. Antriebsstrangsystem nach Anspruch 3, wobei
das Luftdurchflusskorrekturmittel konfiguriert ist, einen Verbrennungszeitraum des Luft/Kraftstoff-Gemischs auf der Grundlage einer Rückführung des Abgases abhängig von der Temperatur des Methanumwandlungskatalysators (24) anzupassen.

8. Antriebsstrangsystem nach Anspruch 7, wobei
das Zündzeitpunktkorrekturmittel eine Funktion des Verzögerns des Verbrennungsstartzeitpunkts durch Verschieben eines Zündzeitpunkts in einer Verzögerungsrichtung, wenn die Temperatur des Methanumwandlungskatalysators (24) abnimmt, besitzt und
das AGR-Korrekturmittel eine Funktion des Verkürzens des Verbrennungszeitraums durch Verschieben des Verbrennungszeitraums in einer Richtung, in der eine Rückführungsmenge zunimmt, wenn die Temperatur des Methanumwandlungskatalysators (24) abnimmt, besitzt.

## Revendications

1. Système de groupe motopropulseur comprenant :
un moteur à combustion interne (20) ;
un moyen de reformage de carburant qui introduit du dioxyde de carbone et de l'hydrogène jusque dans un catalyseur de conversion de méthane (24) pour synthétiser un carburant auxiliaire, le dioxyde de carbone ayant été séparé des gaz d'échappement émis depuis le moteur à combustion interne (20) ;
un moyen d'alimentation de carburant qui alimente le carburant auxiliaire, conjointement avec un carburant principal, au moteur à combustion interne ;
un moyen d'allumage qui allume un mélange air/carburant alimenté au moteur à combustion interne (20) ; et
un moyen de commande (28) qui commande le moyen d'alimentation de carburant et le moyen d'allumage,
dans lequel le moyen de commande (28) inclut un moyen de correction de temporisation d'allumage qui ajuste une temporisation de démarrage de combustion du mélange air/carburant par le moyen d'allumage en dépendance d'une température du catalyseur de conversion de méthane (24).

2. Système de groupe motopropulseur selon la revendication 1,
dans lequel le moyen de correction de temporisation d'allumage a pour fonction de retarder la temporisation de démarrage de combustion en décalant une temporisation d'allumage dans une direction de retard lorsque la température du catalyseur de conversion de méthane (24) est diminuée.

3. Système de groupe motopropulseur selon la revendication 1 ou 2, le système de groupe motopropulseur comprenant en outre :
un moyen de commande d'écoulement d'air qui modifie une force d'un écoulement d'air généré dans une chambre de combustion (36) du moteur à combustion interne (20) ; et
le moyen de commande (28) est configuré pour commander le moyen d'alimentation de carburant, le moyen d'allumage, et le moyen de commande d'écoulement d'air,
dans lequel le moyen de commande (28) inclut un moyen de correction d'écoulement d'air qui ajuste une période de combustion du mélange air/carburant sur la base de l'écoulement d'air en dépendance d'une température du catalyseur de conversion de méthane (24).

4. Système de groupe motopropulseur selon la revendication 3,
dans lequel le moyen de correction d'écoulement d'air a pour fonction de raccourcir la période de combustion en décalant la période de combustion dans une direction dans laquelle l'écoulement d'air généré dans la chambre de combustion (36) est plus fort lorsque la température du catalyseur de conversion de méthane (24) est diminuée.

5. Système de groupe motopropulseur selon la revendication 1 ou 2, le système de groupe motopropulseur comprenant en outre :
un moyen de commande de recirculation des gaz d'échappement dite EGR qui fait recirculer les gaz d'échappement provenant du moteur à combustion interne (20) jusqu'à un passage d'admission (37) du moteur à combustion interne (20) ; et
le moyen de commande (28) est configuré pour commander le moyen d'alimentation de carburant, le moyen d'allumage, et le moyen de commande EGR,
dans lequel le moyen de commande (28) inclut un moyen de correction EGR qui ajuste une période de combustion du mélange air/carburant sur la base d'une recirculation des gaz d'échappement en dépendance d'une température du catalyseur de conversion de méthane (24).

6. Système de groupe motopropulseur selon la revendication 5,
dans lequel le moyen de correction EGR a pour fonction de raccourcir la période de combustion en décalant la période de combustion dans une direction dans laquelle une quantité de recirculation est augmentée lorsque la température du catalyseur de conversion de méthane (24) est diminuée.

7. Système de groupe motopropulseur selon la revendication 3,
dans lequel le moyen de correction d'écoulement d'air est configuré pour ajuster une période de combustion du mélange air/carburant sur la base d'une recirculation des gaz d'échappement en dépendance de la température du catalyseur de conversion de méthane (24).

8. Système de groupe motopropulseur selon la revendication 7,
dans lequel le moyen de correction de temporisation d'allumage a pour fonction de retarder la temporisation de démarrage de combustion en décalant une temporisation d'allumage dans une direction de retard lorsque la température du catalyseur de conversion de méthane (24) est diminuée, et
le moyen de correction EGR a pour fonction de raccourcir la période de combustion en décalant la période de combustion dans une direction dans laquelle une quantité de recirculation est augmentée lorsque la température du catalyseur de conversion de méthane (24) est diminuée.
